(19) Europäisches Patentamt / European Patent Office / Office européen des brevets

(11) **EP 2 375 478 A1**

(12) **EUROPEAN PATENT APPLICATION**

(43) Date of publication:
**12.10.2011 Bulletin 2011/41**

(51) Int Cl.:
*H01M 4/58* (2010.01)    *H01M 10/0525* (2010.01)

(21) Application number: **10003853.8**

(22) Date of filing: **12.04.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(71) Applicant: **Belenos Clean Power Holding AG 2502 Bienne (CH)**

(72) Inventor: **The designation of the inventor has not yet been filed**

(74) Representative: **Ravenel, Thierry Gérard Louis ICB**
**Ingénieurs Conseils en Brevets SA**
**Faubourg de l'Hôpital 3**
**2001 Neuchâtel (CH)**

(54) **Transition metal borate comprising cathode for rechargeable battery**

(57)    Described is a cathode comprising a conductor and a cathode material said cathode material comprising as electronically active material a transition metal (T) borate ($BO_3$) of formula $Li_xT^I_mT^{II}_nO_yBO_3$ in form of nanoparticles, wherein m+n = 1, x = 0 - 3, and y = 0 - 2, and $T^I$ and $T^{II}$ are different transition metals, e.g. selected from Ti, V, Cr, Mn, Fe, Ni, Co and Cu. In a specific embodiment, m is 1 and n is 0.

EP 2 375 478 A1

**Description**

Technical Field

This invention relates to a new and improved cathode material and to a method for manufacturing such an improved cathode material and a battery comprising such cathode material(also referred to as electro-active material or EAM), in particular to a material with reduced weight.

Background Art

The phosphate $LiFePO_4$ is a known compound that has already been described in 1967 and that has entered recently into industrial applications in the field of rechargeable batteries [1, 2]. The electrochemically inactive phosphate serves as a linker of the transition metal (T) groups that are present in the crystal lattice as $TO_6$ octahedrons. $LiFePO_4$ delivers a theoretical capacity of 170 Ah/kg at an average voltage of 3.5V.

$LiFeBO_3$ has been cited in literature and was investigated with respect to electrochemical cathode application and found to have an insufficient capacity and in addition very little electronic conductivity leading to low power density [3].

The electrochemical performance of cathode materials is still a crucial limiting factor for high energy density batteries and an increase of capacity is pivotal. Thus there is a great need for an improved cathode material and an improved rechargeable battery comprising such a cathode material, in particular a battery with high stability over many charging-discharging cycles and/or improved capacity.

Disclosure of the Invention

Hence, it is a general object of the invention to provide a cathode with an improved light weight cathode material, i.e. a cathode material with a larger lithium exchange capacity per weight unit than hitherto used $LiFePO_4$.

Further objects are batteries comprising such cathodes and methods for producing such materials and cathodes.

Now, in order to implement these and still further objects of the invention, which will become more readily apparent as the description proceeds, the cathode of the present invention is manifested by the feature that it comprises a conductor and a cathode coating or cathode material, said cathode material comprising as electronically active material a transition metal (T) borate ($BO_3$) of formula $Li_xT^I_mT^{II}_nO_yBO_3$ in form of nanoparticles, with m+n = 1, x = 0 - 3, and y = 0 to 2, and $T^I$ and $T^{II}$ being different transition metals. In a specific embodiment, m is 1 and n is 0.

Suitable borate-based compounds are e.g. $Li_xT^I_mT^{II}_nO_yBO_3$ wherein $T^I$ and $T^{II}$ are selected from = Ti, V, Cr, Mn, Fe, Ni, Co, Cu, preferably Ti, V, Cr, Mn, Fe, Cu. Such compounds were found to be better suited for the cathode application than $LiFePO_4$ provided that they are prepared in form of nanoparticles. The advantage of $Li_xT^I_mT^{II}_nO_yBO_3$ compounds with respect to the phosphates is a lower specific weight of borate compared with phosphate due to the atomic weight difference between B (10.81) and P (30.97) and the "lack" of one oxygen atom per formula unit resulting in a weight reduction of 38 % with identical ionic charge giving rise to an enhancement of the specific electrochemical lithium exchange capacity which, for the iron compound (T=Fe) amounts to 225 Ah/kg. This is an enhancement of about 33% in capacity.

As the new cathode materials may exhibit low ion end electronic conductivity this obstacle can be overcome by utilizing nanoparticles of such electro-active materials.

Examples for such borates are $LiMnBO_3$ and $LiFeBO_3$ that were both also synthesized in nanoscopic form leading to much improved results.

To enhance the electric performance of the nanoparticles conductive coatings, e.g. carbon and/or graphene coatings or coatings obtained by pyrolysis of various organic precursors, such as e.g. sugars, may be applied to the particles. Such coatings proved suitable for producing cathodes and also anodes that quickly gain the optimal features and retain them over many charging/discharging cycles.

In the scope of the present invention it was also found that the cathode material enhances thermal stability of the battery. This is provided by the involatile borates which tend to form an inert coating of borate glas on the nanoparticle surface at elevated temperatures.

Electrodes with such nanoparticulate materials can be prepared by mixing such nanoparticles with electronically conducting particles such as carbon black and/or graphite and a binder or - in an alternative embodiment - with a nanoparticulate electronically conducting binder, optionally in the presence of further conducting particles such as carbon black and/or graphite, or by applying a pyrolysis reaction performed such that the nanoparticulate EAM is conductively coated and simultaneously bonded.

In a preferred embodiment, the cathodes and/or the anodes are formed from a nanocomposite, that is

- an open porous material and

- electrically conducting.

In this embodiment the cathode comprising the inventive nanoparticulate cathode material and/or the anode comprising nanoparticulate anode material comprise the nanopariculate electronically active material (EAM) and nanoparticulate electrically conducting binder material (CB)homogeneously distributed. The mean particle sizes of the nanoparticles of the electronically active material and the average particle sizes of the nanoparticulate binder material both have similar sizes and/or

both are in the range of <500 nm (mean particle size), in particular in the range of 5 to 500 nm, preferably in the range of 5 to 400 nm, more preferred in the range of 20 to 100 nm.

The electrodes may optionally and preferably comprise additional conductive particles such as carbon black and/or graphite.

Similar particle sizes have proved to be important. The carbon coated particles in a nanocomposite electrode material as described herein behave superiorly to known material. Without wanting to be bound by any theory this might be due to the nanoparticles being covered by fine nanoparticulate electrically conducting binder material and fine nanosized carbon that make the electrical contact much better with the current collector and among the particles. This is not possible with "large", micron sized electrically conducting fillers such as micron sized graphite flakes and/or bigger carbon particles in non conducting binder matrix, which lead to poor capacity retention.

Similar size means differing not more than 100 %, preferably not more than 50 %, more preferred differing not more than 20 %.

The electrode coatings preferably are open porous materials. An open porous material means that the pores are so large and so interconnected that electrolyte and $Li^+$-diffusion is easily possible.

The nanocomposite electrode comprises the EAM and the CB nanoparticles intimately mixed with each other and preferably stabilized either due to sufficient stickiness of the binder at mixing, storage and usage temperature or by a pressure treatment with or without heating. A thermoplastic material with low glass transition point of the conductive binder is preferred not only for binding the particles but also for binding the nanocomposite to the conductor, usually an aluminium electrode/substrate.

Electrically conductive polymers encompass polyacetylene, polyaniline, polypyrrol and polythiophen. These polymers can be substituted or unsubstituted dependent on the desired features. A presently preferred binder is poly (3,4-ethylenedioxythiophene) referred to below as PEDOT. This polymer is conductive, has suitable stickiness and can readily be produced in nanoparticular form.

In a specific embodiment, the CB nanoparticles are present in an amount of 4 to 10 % based on the weight of the nanocomposite.

As already mentioned above, in case that the EAM particles are of an insulating material or in order to improve their conductivity, the nanoparticles are coated with a conductive layer, in particular with a carbon or graphite or graphene layer.

In an alternative battery, the nanoparticulate cathode material and/or the nanoparticulate anode material may be bonded by a pyrolyzed layer that simultaneously acts as conductive coating and as binder. Such pyrolysis may be performed in that the EAM, a pyrolysis precursor such as a sugar, and a soluble lithium source are suspended or dissolved in a suitable solvent such as e.g. water and/or alcohols. The solvents are evaporated at mild conditions and then the dried product is pyrolized at temperatures of 250 to 700°C, in particular 400-600°C.

This method may analogeously be applied for producing conductively coated nanoparticulate EAM that are bonded by other methods.

The good behavior of such electrodes is assumed to be due to the nanoparticulate EAM being coated with a lithium ion conducting coating comprising primarily carbon but also oxygen, lithium and hydrogen.

Methods for producing nanoparticulate EAM, coating nanoparticulate EAM, producing nanoparticulate CB, and producing a nanocomposite anode are described below.

The EAM may be prepared via pyrolysis or via solvent chemistry such as the sol-gel method, or by gas treatment of metals in the absence of oxygen.

A suitable method for producing borates of the present invention is via a sol-gel method. Said method comprises preparing stable sols, in the stoichiometric ratio, of a Li salt and a transition metal salt soluble in non aqueous protic solvent such as polyols, e.g. ethylene glycols and glycerin, or propionic acid and adding a solution of a borate precursor such as a boron alcoholate, e.g. $B(OEt)_3$, boric acid, HB03, or soluble borates in a suitable solvent, e.g. polyols such as ethylenen glycol, glycerin etc., or for $B(OEt)_3$ preferably a mixture of the non aqueous protic solvent and an alcohol such as ethanol. Then, the composition is hydrolysed by adding water and finally the solvents are evaporated resulting in a gel powder.

The gel powder may be annealed, e.g. in a graphite crucible, at 600-1100°C in an atmosphere with reduced oxygen content, e.g. under vacuum or inert gas, for generating the borate.

Nanoparticulate electrically conductive polymers such as Poly (3,4-ethylenedioxythiophene) (PEDOT) may be prepared using the reverse microemulsion technique as described by Sun et al. [5].In the case of PEDOT synthesis, a microemulsion is prepared comprising emulsified oxidant comprising particles/droplets such as $FeCl_3$/bis(2-ethylhexyl) sulfosuccinate particles as polymerization aid.

For forming the nanocomposite electrode, the nanoparticulate CB is preferably suspended in a suitable solvent such as acetonitril, and the nanoparticulate, carbon coated EAM is then added and the mixture homogenized, dried and optionally pressed with or without heating. If desired, additionally a conductive nanoparticulate filler such as carbon black may be added.

PEDOT is an attractive candidate as a nanoparticulate conductive polymeric binder. Its advantages are high chemical and environmental stability, easy synthesis in various particle sizes and its stickiness that leads to a good interparticular adhesion and sufficient substrate adhesion upon pressurizing with a pressure of 0.5 to 2 bar or $5 \cdot 10^4$ to $2 \cdot 10^5$ Pa, respectively, at room temperature.

Dependent on the stability desired, heating can be absent since the small particles are sticky due to Vander-Waals forces.

The advantages of a rechargeable battery using a borate cathode is primarily the light weight or the higher capacity per mass unit compared to phosphate cathodes and a further benefit is the improved thermal stability.

Such cathodes may be used in rechargeable lithium ion battery in combination with any anode, preferably however in connection with an electrolyte selected from $LiPF_6$ in a mixture of ethylene carbonate with ethyl methyl carbonate and/or dimethyl carbonate. The anode may be any known anode, in particular also an anode with nanoparticulate EAM and preferably also nanoparticulate CB, or nanoparticulate EAM coated and bonded by a pyrolysis method.

Such cathodes are suitable for being used with a broad variety of anodes.

Brief Description of the Drawings

The invention will be better understood and objects other than those set forth above will become apparent when consideration is given to the following detailed description thereof. Such description makes reference to the annexed drawings, wherein the Figures represent:

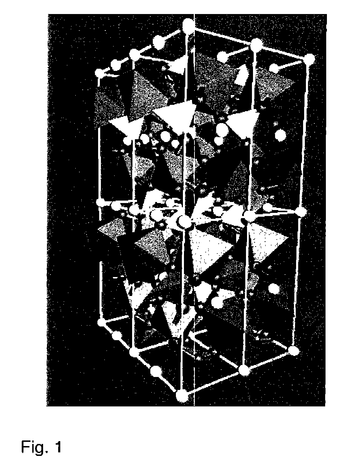

Figure 1: Crystal structure of the borates LiFeB03.

Figure 2: The theoretical and experimental XRD powder pattern for h-LiMnB03 show a good correlation.

Figure 3: SEM images of h-LiMnB03 synthesized by sol-gel method. The presence of nano particles (60-150 nm) could be seen in these images; however these crystallites probably agglomerate into larger particles (0.3-10 $\mu$m) forming planes of crystals.

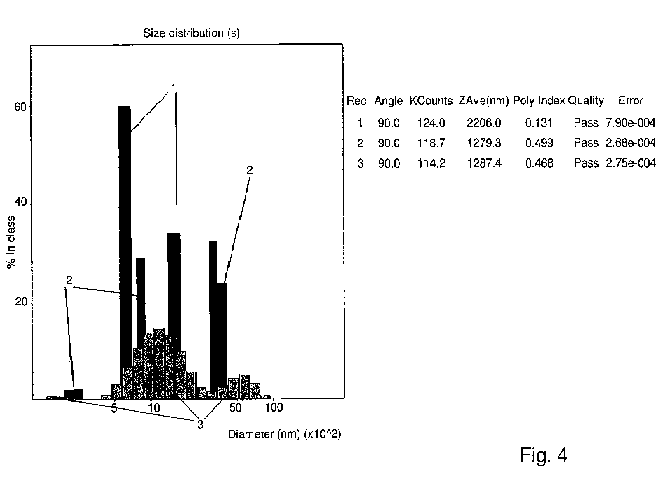

Figure 4: Particle size distribution for LiMnB03

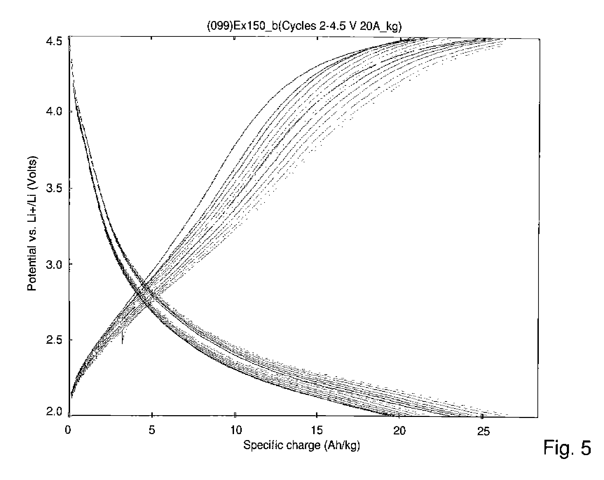

Figure 5: Potential vs specific charge of LiFeB03

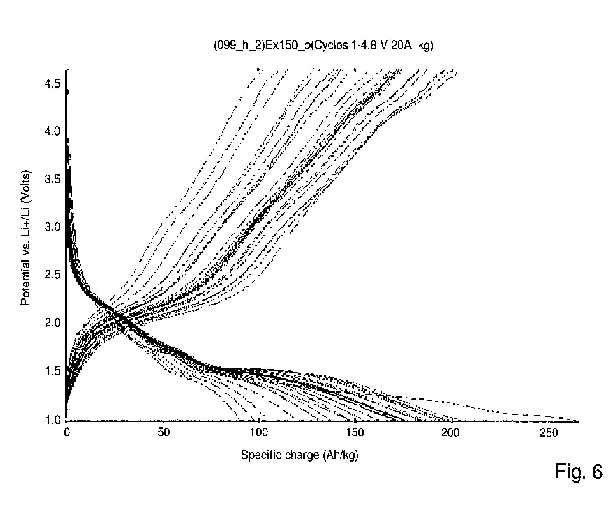

Figure 6: Cycling of pure $LiFeBO_3$

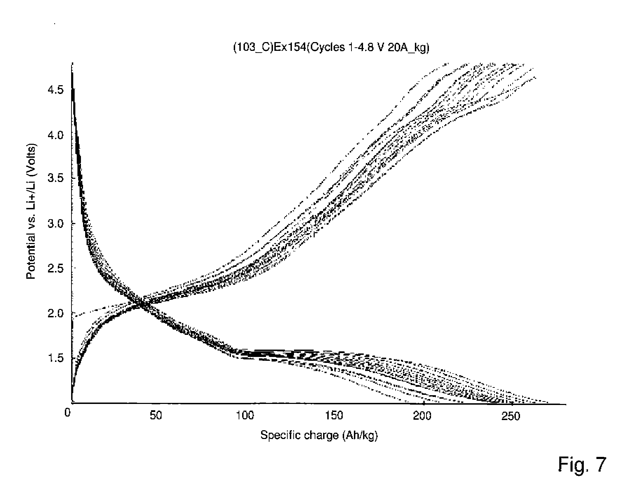

Figure 7: Cycling of carbon coated $LiFeBO_3$

Modes for Carrying Out the Invention

As already mentioned above, a general object of the invention is to provide an improved light weight cathode material, i.e. a cathode materials with a larger lithium exchange capacity than hitherto used $LiFePO_4$.

In first experiments $LiTBO_3$ with T = Mn and Fe were examined, both in nanoparticulate form. The specific electrochemical lithium exchange capacity, for the iron compound (T=Fe), amounts to 225 Ah/kg. This is an enhancement of about 33% in capacity compared to the respective phosphate.

**Electronically active material**

Example 1: Sol-gel synthesis of h-$LiMnBO_3$

The synthesis of h-$LiMnBO_3$ was accomplished by a sol-gel route that was previously applied by Maia et. al. [4] for the synthesis of $Y_{0.9}Er_{0.1}Al_3(BO_3)_4$ nano-powders.

To prepare stable sols, in the stoichiometric ratio, 0.01 mol $LiNO_3$ and 0.01 mol $Mn(NO_3)_2.4H_2O$ were dissolved in 11.5 ml propionic acid at 80 °C for 3 hours. Similarly, 0.01 mol $B(OEt)_3$ was added into a mixture of 30ml propionic acid-55ml ethanol and heated at 80 °C/3h. Two solutions were mixed and continued to be heated at 80 °C for 1 hour. Then, 5 mol of water were added into the solution for the hydrolysis. The final solution was evaporated at 80-100 °C and the gel powder was obtained.

The gel powder was put in a graphite crucible and annealed at 1050 °C/15h in a roughly vacuumed quartz tube. White-pink crystals were obtained at the end of the process.

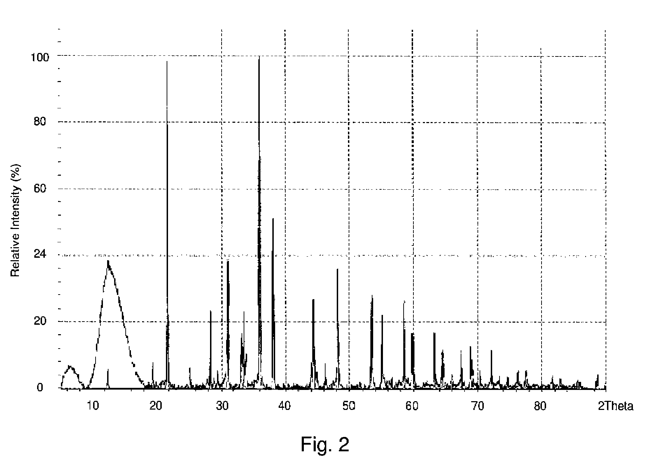

The XRD powder pattern of the product is illustrated in figure 2. The experimental pattern matched the theoretical pattern with some impurity. The average crystallite size of $LiMnBO_3$ was calculated with the Scherrer equation:

$$\texttt{Crystallite size = 0.9}\lambda\ \texttt{/ (}\beta\ \texttt{cos}\theta\texttt{)}$$

where $\lambda$ is the wavelength of incident X-rays, $\beta$ is the full width at the half maximum of $2\theta=35.99$ peak, and $\theta$ is the Bragg angle. The average crystallite size was found to be approximately 60-65 nm.

Although first investigations of $LiMnBO_3$ support the finding that it is a very good cathode material in view of its relatively low molecular weight and the different oxidation states obtainable with Mn, the inventors believe that optimization of the several preparation steps will improve the utility of this material.

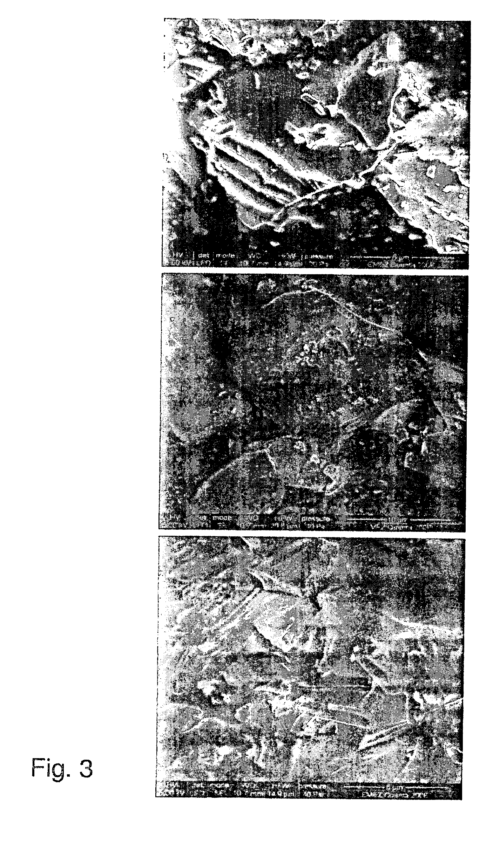

The nanoparticular $LiMnBO_3$ (see Figures 2, 3 for freshly prepared material) has to coated by a thin conducting layer.

Example 2: Sol-gel synthesis of $LiFeBO_3$

$LiFeBO_3$ may be produced following the above described procedure but using $Fe(NO_3)_2$ instead of $Mn(NO_3)_2$

**Nanoparticulate Conductive Binder**

**Example 3**: *Preparation of PEDOT nanostubs via reverse emulsion directed synthesis*

The technique of reverse microemulsion in the lines of Sun et al. [5] was employed for the synthesis of PEDOT nanoparticles. Initially 8.5 g (19.12 mmol) of sodium bis(2-ethylhexal) sulfosuccinate (AOT) was dissolved in 70 ml of n-hexane in an ultrasonic bath at 100 % power (410 W). Then a mixture of 1.6 g (10.00 mmol) anhydrous $FeCl_3$ in 1 ml distilled water was added dropwise with a Pasteur-pipette. When all the oxidant was added, the resulting solution was taken out of the ultrasonic bath and gently shaken by hand until a milky-yellow precipitate appeared. Then 0.38 ml of ethylenedioxythiophene (EDOT) was added to the emulsion at once. The resulting mixture was then kept at 10°C in the rotavap for 1h. Polymerization started when the temperature of the water bath reached about 20°C. After that the temperature of the water bath was maintained at 30°C for 3h. Meanwhile the reaction mixture turned green and subsequently black. The product was then suction filtered and washed with ethanol and acetone. Drying at 100°C over night yielded a blue/black nanopowder of PEDOT.

**Literature**

[1] Santoro, R.P. and Newman, R.E. "Antiferromagnetism in LiFePO4", Acta Crystellogr., 22, 344-347 (1967)

[2] Padhi, A.K., Nanjundaswamy, K.S. & Goodenough, J.B., J. Electrochem. Soc., 144, 1188 (1997)

[3] V. Legagneur, Y. An, A. Mosbah, R. Portal, A. Le Gal La Salle, A. Verbaere, D. Guyomard and Y. Piffard, Solid State Ionics, 139, 37 (2001).

[4] L.J.Q. Maia, V.R. Mastelaro, S. Pairis, A. C. Hernandes, A. Ibanez, "A sol-gel route for the development of rare-earth aluminum borate nanopowders and transparent thin films", J. Solid State Chem., 180, 611-18 (2007)

[5] Yong-Jun Li, Wei-Jun Huang, and Shi-Gang Sun, Angewandte Chemie, 118, 2599 (2006).

**Claims**

1. A cathode comprising a conductor and a cathode coating said cathode coating comprising as electronically active material a transition metal (T) borate ($BO_3$) of formula $Li_xT^I{}_mT^{II}{}_nO_yBO_3$ in form of nanoparticles, wherein m+n = 1, x = 0 - 3, and y = 0 - 2, and $T^I$ and $T^{II}$ are different transition metals.

2. The cathode of claim 1 wherein the transition metal is selected from Ti, V, Cr, Mn, Fe, Ni, Co, Cu, in particular Ti, V, Cr, Mn, Fe, Cu.

3. The cathode of claim 1 or 2, wherein m is 1 and n is 0.

4. The cathode of anyone of the preceding claims wherein the nanoparticles are conductively coated.

5. The cathode of claim 4 wherein the conductive coating is a carbon coating, e.g. a coating obtained by pyrolysis or a graphene coating.

6. The cathode of anyone of the preceding claims wherein the nanoparticles are bound together and to the conductor by means of conducting binder nanoparticles.

7. The cathode of anyone of claims 1 to 5, wherein the nanoparticles are coated and fused together by a carbon and Li comprising layer obtainable via pyrolysis.

8. A battery comprising an cathode of anyone of the preceding claims.

9. An electrically active cathode material being a $Li_xT^I_mT^{II}_nO_yBO_3$ in form of nanoparticles.

10. The electrically active cathode material of claim 9 which is conductively coated.

Fig. 1

Fig. 2

Fig. 3

Fig. 4

Fig. 5

(099_h_2)Ex150_b(Cycles 1-4.8 V 20A_kg)

Fig. 6

Fig. 7

Europäisches
Patentamt

European
Patent Office

Office européen
des brevets

# EUROPEAN SEARCH REPORT

Application Number

EP 10 00 3853

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Y.Z. DONG, Y.M. ZHAO, Z.D. SHI, X.N. AN, P. FU, L. CHEN: "The structure and electrochemical performance of LiFeBO3 as a novel Li-battery cathode material." ELECTROCHIMICA ACTA, vol. 53, 2 October 2007 (2007-10-02), pages 2339-2345, XP002606643 online * abstract; figure 11b * | 1-10 | INV.<br>H01M4/58<br>H01M10/0525 |
| X | ABOUIMRANE A ET AL: "Carbon Nano-Painting: Application to Non-Phosphate Oxyanions e.g. Borate" PROCEEDINGS - ELECTROCHEMICAL SOCIETY, ELECTROCHEMICAL SOCIETY, PENNINGTON, NJ, US, vol. 2003-20, 1 January 2003 (2003-01-01), pages 15-22, XP009140386 ISSN: 0161-6374 | 1-5,7-10 | |
| A | * abstract * | 6 | |
| A | LING CHEN, YANMING ZHAO, XIAONING AN, JIANMIN LIU, YOUZHONG DONG, YINGHUA CHEN, QUAN KUANG: "Structure and electrochemical properties of LiMnBO3 as a new cathode material for lithium-ion batteries." JOURNAL OF ALLOYS AND COMPOUNDS, vol. 494, 22 January 2010 (2010-01-22), pages 415-419, XP002606644 online | 1-10 | TECHNICAL FIELDS SEARCHED (IPC)<br><br>H01M |
| A | JAN L. ALLEN, KANG XU, SAM S. ZHANG AND T. RICHART JOW: "LiMBO3 (M=fE, mN): Potential Cathode for Lithium Ion Batteries" MATERIAL RESEARCH SOCIETY SYMP. PROC., vol. 730, 2002, pages VI.8.1-VI.8.6, XP002606645 | 1-10 | |

The present search report has been drawn up for all claims

| Place of search | Date of completion of the search | Examiner |
|---|---|---|
| Munich | 25 October 2010 | Martín Fernández, A |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.......................................................................
& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SANTORO, R.P. ; NEWMAN, R.E.** Antiferromagnetism in LiFePO. *Acta Crystellogr,* 1967, vol. 22, 344-347
- **PADHI, A.K. ; NANJUNDASWAMY, K.S. ; GOODENOUGH, J.B.** *J. Electrochem. Soc.,* 1997, vol. 144, 1188
- **V. LEGAGNEUR ; Y. AN ; A. MOSBAH ; R. PORTAL ; A. LE GAL LA SALLE ; A. VERBAERE ; D. GUYOMARD ; Y. PIFFARD.** *Solid State Ionics,* 2001, vol. 139, 37

- **L.J.Q. MAIA ; V.R. MASTELARO ; S. PAIRIS ; A. C. HERNANDES ; A. IBANEZ.** A sol-gel route for the development of rare-earth aluminum borate nanopowders and transparent thin films. *J. Solid State Chem.,* 2007, vol. 180, 611-18
- **YONG-JUN LI ; WEI-JUN HUANG ; SHI-GANG SUN.** *Angewandte Chemie,* 2006, vol. 118, 2599